# EUROPÄISCHE PATENTSCHRIFT

(11) **EP 0 928 921 B1**
(45) Veröffentlichungstag und Bekanntmachung des Hinweises auf die Patenterteilung: **09.04.2003**
(21) Anmeldenummer: 98123999.9
(22) Anmeldetag: 17.12.1998
(51) Int. Cl.: F16L 23/08

(54) **Profilschelle und Verfahren zu ihrer Herstellung**
Profile clamp and manufacturing method
Collier à profil et procédé de fabrication

(30) Priorität: 07.01.1998 DE 19800283
(43) Veröffentlichungstag der Anmeldung: 14.07.1999
(73) Patentinhaber: Rasmussen GmbH, 63477 Maintal (DE); ABB Schweiz Holding AG, 5400 Baden (CH)
(72) Erfinder: Kreipe, Hans-Jürgen, Dr., 63636 Brachtal (DE); Weisheit, Claus Dieter, 79848 Bonndorf (DE)
(74) Vertreter: Knoblauch, Andreas, Dr.-Ing.

(56) Entgegenhaltungen:
- DE-A- 3 038 491
- DE-A- 19 633 789
- DE-B- 1 135 249
- FR-A- 1 016 629
- US-A- 2 756 079
- US-A- 2 842 385
- US-A- 2 941 823
- US-A- 3 498 649
- US-A- 3 964 773

## Beschreibung

Die Erfindung bezieht sich auf eine Profilschelle aus Stahl zum Verbinden von Bauteilen, wobei die Profilschelle zumindest teilweise konische, nach innen umgebogene Seitenwände und Schweißverbindungsstellen aufweist, und auf ein Verfahren zur Herstellung der Profilschelle.

Bekannte Profilschellen dieser Art, wie sie aus der DE 30 38 491 C2, der US 3 498 649, der US 3 964 773, der FR 1 016 629 und den von der Anmelderin herausgegebenen Prospekten "NORMA" Kegelflanschverbindungen", 1979 und 1988 sowie "NORMA Profilschelle mit Kegelflansch", November 1996, bekannt sind, werden aus ferritischen oder rein austenitischen Stählen durch reine Kaltverformung mit anschließender Schweißung hergestellt. Diese Stähle sind jedoch nicht temperaturbeständig oder haben einen zu hohen Wärmeausdehnungskoeffizienten von 18·10⁻⁶ bis 22·10⁻⁶ m/m°C (für austenitische warmfeste Stähle), der zu Spannkraftverlusten bei Erwärmung und damit zu Undichtigkeiten in der Verbindungsstelle führt. Für Turbolader, beispielsweise von großen Dieselmotoren oder Gasturbinen, werden derzeit ferritische Gußwerkstoffe für das Gehäuse eingesetzt, die aufgrund ihrer Gefügestruktur im Bereich von 20°C bis 600°C einen Wärmeausdehnungskoeffizienten aufweisen, der sich mit der Temperatur von 10·10⁻⁶ bis 14·10⁻⁶ m/m°C ändert. Die bekannten Profilschellen aus ferritischen oder rein austenitischen Stählen sind daher zum Verbinden von Gehäuseteilen solcher Turbolader oder anderer Bauteile mit Flanschen an den zu verbindenden Enden, die in Temperaturbereichen von bis zu 750°C betrieben werden, wegen ihrer zu hohen Wärmeausdehnungskoeffizienten ungeeignet, da die Verbindungsstelle mit zunehmender Temperatur undicht würde. Undichte Verbindungsstellen führen zum Beispiel bei Turboladern von Dieselmotoren oder Gasturbinen zu einem erheblichen Leistungsverlust.

Zudem bedeutet eine undichte beziehungsweise sich lösende Verbindung ein Sicherheitsrisiko: Ein derart montierter Turbolader kann aufgrund einer losen Gehäuseverbindung bersten, was zu Verletzungen von Personen führen kann.

Der Erfindung liegt die Aufgabe zugrunde, eine Profilschelle der eingangs genannten Art und ein Verfahren zu ihrer Herstellung anzugeben, die beziehungsweise das den Einsatz ferritischer perlitischer Gußwerkstoffe für heißgasdurchströmte Bauteile erlaubt und in einem Temperaturbereich von bis zu 750°C den gewünschten Anforderungen an Dichtigkeit und Stabilität genügt.

Erfindungsgemäß ist diese Aufgabe dadurch gelöst, daß der Stahl martensitisch ist und bei einer Umgebungstemperatur von 20°C bis 750°C einen um wenigstens 0,3·10⁻⁶ m/m°C kleineren Wärmeausdehnungskoeffizienten als ein ferritischer Gußwerkstoff hat.

Martensitischer Stahl hat den Vorteil, daß er eine hohe Härte auch bei sehr hohen Temperaturen aufweist, wie sie in der Verbindungsstelle von heißgasdurchströmten Bauteilen, wie Gehäuseteilen von Turboladern, auftreten, und daher auch hohen Kräften, die auf die Verbindungsstelle ausgeübt werden, ohne Verformung standhält. Durch die erfindungsgemäße Wahl des Wärmeausdehnungskoeffizienten dehnt sich die Profilschelle ferner etwas weniger aus als aus ferritischem Gußwerkstoff bestehende, durch die Profilschelle zu verbindende Bauteile. Die durch die Profilschelle auf die Flansche oder dergleichen der zu verbindenden Bauteile ausgeübte Einspannkraft erhöht sich daher mit zunehmender Temperatur der Verbindungsstelle, so daß der Zusammenhalt der Bauteile und die Dichtigkeit ihrer Verbindung nicht nur aufgrund der geringeren Verformbarkeit der Profilschelle, sondern auch aufgrund ihrer mit zunehmender Temperatur ansteigenden Spannkraft sichergestellt ist. Bei Verwendung der Profilschelle für zu verbindende Bauteile, die von heißen Fluiden durchströmt werden, insbesondere für Turbolader-Gehäuseteile oder ihre Anschluß-Rohrstutzen, werden mithin nicht nur die vorstehend geschilderten Gefahren vermieden, sondern es ist nunmehr auch möglich, die bisher angewandte aufwendige Art der Verschraubung der Flansche oder die Verwendung zusätzlicher mit Löchern zur Durchführung mehrerer Schrauben versehener Klemmringe zu vermeiden.

Im einzelnen kann der Stahl zur Erzielung der geforderten Eigenschaften, neben Eisen als Hauptbestandteil, aus folgenden Bestandteilen in Gewichtsprozent bestehen: bis zu 0,45% C, bis zu 2,0% Si, bis zu 2,0% Mn, bis zu 0,04% P, bis zu 0,04% S, 15 bis 20% Cr, von 1 bis 8% Ni, bis zu 2,5% Mo, bis zu 0,5% V, bis zu 0,1% Al, bis zu 0,1% Co, bis zu 0,4% Cu, bis zu 0,4% Pb, bis zu 0,1% Se, bis zu 0,1% Te, bis zu 0,5% Ti, bis zu 0,1% W, bis zu 0,05% Zr, bis zu 0,01% O, bis zu 0,01% N, bis zu 0,1% Bi, bis zu 0,001% B, bis zu 0,05% Nb.

Vorzugsweise ist dafür gesorgt, daß für den Stahl der Höchstwert von C bei 0,4%, von Si bei 0,5%, von Mn bei 0,8% und von Mo bei 2,0% liegt und daß der Mindestwert von Ni bei 1,0%, von Mo bei 0,3% und von V bei 0,25% liegt.

Sodann kann eine vorteilhafte Ausgestaltung der Profilschelle darin bestehen, daß sie wenigstens ein Spannband mit in Form von Schlaufen zurückgebogenen und am Spannband angeschweißten Endabschnitten aufweist, daß jede der Schlaufen von einem Bolzen durchsetzt ist, daß die Bolzen in benachbarten Schlaufen mittels einer mit ihrem Schaft durch Schlitze in den Schlaufen hindurchgeführten Spannschraube mit Kopf verbunden sind, daß an der Innenseite jedes Spannbands wenigstens ein im axialen Querschnitt etwa hutförmiges Kreisringsegment angeschweißt ist, dessen Seitenwände mit Versteifungen versehen sind, daß der eine zweier benachbarter Bolzen einen etwa tropfenförmigen Querschnitt mit einen weitgehend rechten Winkel einschließenden Seiten hat, von denen sich die eine Seite etwa radial nach außen vom Schellenumfang weg und die andere Seite in Umfangsrichtung der Schelle erstreckt, daß die Form der den im Querschnitt etwa tropfenförmigen Bolzen umgebenden Schlaufe diesem Querschnitt angepaßt ist und daß sich der Spannschraubenkopf an der sich vom Schellenumfang weg erstreckenden Seite der angepaßten Schlaufe abstützt. Eine solche Profilschelle hält bereits aufgrund ihrer Formgebung sehr hohen Axialkräften stand, wie sie bei Profilschellen mit Durchmessern von bis zu 500 mm und mehr auftreten können, ist aber dennoch aufgrund der getrennten Ausbildung der profilierten Kreisringsegmente und deren Verbindung durch ein Spannband in Umfangsrichtung hinreichend flexibel, um sich dem Durchmesser von Flanschen oder dergleichen an zu verbindenden Bauteilen genau anpassen zu können. Die Abstützung des Spannschraubenkopfes an der ihm zugekehrten Seite der dem tropfenförmigen Querschnitt des einen Bolzens angepaßten Schlaufe hat den Vorteil, daß der in dieser Schlaufe ausgebildete Schlitz mit geringerer Breite, die etwa gleich dem Durchmesser des Spannschraubenschaftes ist, als bei Durchführung des Spannschraubenkopfes durch den Schlitz ausgebildet ist und mithin die Schlaufe höheren Spannkräften standhält. Dabei ist gleichzeitig sichergestellt, daß sich der Spannschraubenkopf großflächig an der etwa radialen Schlaufenseite abstützt, ohne sie mit seiner Kante zu belasten.

Eine alternative Ausbildung der erfindungsgemäßen Profilschelle kann darin bestehen, daß sie wenigstens ein Kreisringsegment mit in Form von Schlaufen zurückgebogenen und am Kreisringsegment angeschweißten Endabschnitten aufweist, daß jede der Schlaufen von einem Bolzen durchsetzt ist, daß die Bolzen in benachbarten Schlaufen mittels einer mit ihrem Schaft durch Schlitze in den Schlaufen hindurchgeführten Spannschraube mit Kopf verbunden sind, daß jedes Kreisringsegment im axialen Querschnitt etwa hutförmig ist und Seitenwände mit Versteifungen aufweist, daß der eine zweier benachbarter Bolzen einen etwa tropfenförmigen Querschnitt mit einen weitgehend rechten Winkel einschließenden Seiten hat, von denen sich die eine Seite etwa radial nach außen vom Schellenumfang weg und die andere Seite in Umfangsrichtung der Schelle erstreckt, daß die Form der den im Querschnitt etwa tropfenförmigen Bolzen umgebenden Schlaufe diesem Querschnitt angepaßt ist und daß sich der Spannschraubenkopf an der sich vom Schellenumfang weg erstreckenden Seite der angepaßten Schlaufe abstützt. Bei dieser Ausbildung kommt man ohne separate Kreisringsegmente aus, wenn etwas geringere Verbindungskräfte durch die Profilschelle auf die zu verbindenden Bauteile ausgeübt werden können.

Vorzugsweise sind die Versteifungen durch an den erwähnten Seitenwänden angeschweißte Bleche gebildet. Diese Bleche stellen eine sehr hohe Biegesteifigkeit der Seitenwände sicher.

Zwischen dem den Spannschraubenkopf und der ihn abstützenden Schlaufe kann eine Unterlegscheibe mit größerem Durchmesser als der des Schraubenkopfes angeordnet sein. Eine solche Unterlegscheibe erleichtert nicht nur das Spannen der Spannschraube, sondern verringert auch die Flächenpressung zwischen dem Spannschraubenkopf und der ihn abstützenden Seite der Schlaufe.

Das erfindungsgemäße Verfahren zur Herstellung der Profilschelle beinhaltet, daß das Material für die Profilschelle in Form eines Bandes vorvergütet wird und nach der Formgebung und Schweißung die Schweißstellen zur Gefügehomogenisierung induktiv angelassen werden. Durch das Vorvergüten werden optimale technologische Eigenschaften des Stahls erreicht. Das induktive Anlassen, vorzugsweise nach einer kontrollierten Abkühlung der Schweißstellen, verringert oder vermeidet die Gefahr einer Rißbildung im Bereich der Schweißstellen.

Bei der induktiven Anlaßbehandlung kann es sich um eine Kurzzeit-Pendelglühung, die vorzugsweise um die Ac1-Temperatur herum erfolgt, von weniger als 5 Minuten handeln. Dies ergibt eine optimale Gefügeausbildung in den Schweißzonen.

Die Erfindung und ihre Weiterbildungen werden nachstehend anhand der beigefügten Zeichnungen bevorzugter Ausführungsbeispiele näher beschrieben. Es zeigen:
- Fig. 1: eine Seitenansicht eines ersten Ausführungsbeispiels einer erfindungsgemäßen Profilschelle,
- Fig. 2: den Schnitt II-II der Fig. 1,
- Fig. 3: die gleiche Ansicht wie die nach Fig. 2, jedoch in etwas größerem Maßstab und im gespannten Zustand der Profilschelle, in dem sie zwei Flansche von im Ausschnitt dargestellten Gehäuseteilen eines Turboladers verbindet, und
- Fig. 4: eine der Fig. 3 entsprechende Darstellung eines zweiten Ausführungsbeispiels einer erfindungsgemäßen Profilschelle.

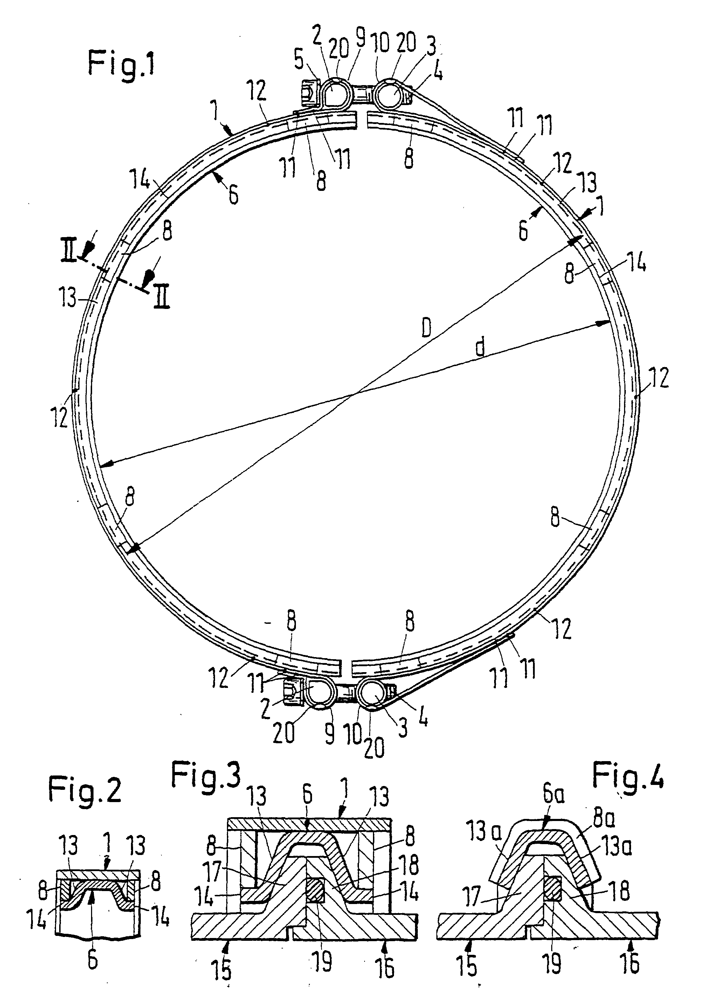

Die Profilschelle nach den Fig. 1 bis 3 besteht aus zwei etwa halbkreisförmigen Spannbändern 1, vier Bolzen 2, 3, zwei Spannschrauben 4 mit Kopf, zwei Unterlegscheiben 5, zwei etwa halbkreisförmigen Kreisringsegmenten 6 und über den Umfang der Schelle beiderseits der Kreisringsegmente 6 verteilten Versteifungen in Form von Blechen 8.

Jedes Spannband 1 hat in Form von Schlaufen 9, 10 zurückgebogene und außen am Spannband 1 durch Buckelschweißungen 11 angeschweißte Endabschnitte. Jede Schlaufe 9, 10 ist von einem der Bolzen 2, 3 durchsetzt. Die Bolzen 2, 3 in den benachbarten Schlaufen 9, 10 haben jeweils einen sich über den größten Teil des betreffenden Bolzens 9, 10 herum erstreckenden Schlitz, durch den sich eine der Spannschrauben 4 mit ihrem Schaft hindurch erstreckt und die Bolzen 2, 3 der benachbarten Schlaufen 9, 10 verbindet, wobei der Bolzen 2 eine radial durchgehende gewindelose Bohrung und der Bolzen 3 eine radiale Gewindebohrung aufweist, durch die der Gewindeschaft der Spannschraube 4 hindurchgeführt ist. Der eine Bolzen 2 der benachbarten Bolzen 2, 3 hat einen etwa tropfenförmigen Querschnitt mit einen weitgehend rechten Winkel einschließenden Seiten, von denen sich die eine Seite etwa radial nach außen vom Schellenumfang weg und die andere Seite in Umfangsrichtung der Schelle erstreckt. Die Form der den Bolzen 2 umgebenden Schlaufe 9 ist dem Querschnitt dieses Bolzens 2 angepaßt, und der Kopf der Spannschraube 4 stützt sich über eine Unterlegscheibe 5 an der sich vom Schellenumfang weg erstreckenden Seite der Schlaufe 9 ab. Der Kopf der Spannschraube 6 stützt sich daher großflächig über die Unterlegscheibe 5 an der ihm zugekehrten Seite der Schlaufe 9 und über diese Seite am Bolzen 2 ab. Der in der Schlaufe 9 ausgebildete Schlitz kann mithin eine geringere Weite, entsprechend etwa dem Durchmesser des Schaftes der Spannschraube 4, als in dem Falle aufweisen, daß sich der Spannschraubenkopf durch den Schlitz der Schlaufe 9 hindurch erstreckt und unmittelbar am Bolzen 2 abstützt. Die Schlaufe 9 hält daher einer hohen Spannkraft stand, die gleich der der Schlaufe 10 ist.

An der Innenseite jedes Spannbands 1 ist ein im axialen Querschnitt etwa hutförmiges Kreisringsegment 6 durch über den Umfang verteilte Schweißpunkte 12 angeschweißt. Die Seitenwände 13 der Kreisringsegmente 6 haben sich in Umfangsrichtung erstreckende und axial in entgegengesetzten Richtungen vorstehende Flansche 14, so daß der Querschnitt der Kreisringsegmente 6 etwa der eines Hutes mit Krempe entspricht. Diese Flansche 14 erhöhen die Steifigkeit der Seitenwände 13.

Ferner sind die Seitenwände 13 mit Versteifungen in Form der Bleche 8 versehen. Die Bleche 8 sind einerseits an den Flanschen 14 der Seitenwände 13 und andererseits an der Innenseite der Spannbänder 1 mittels eines Schweißdrahts angeschweißt. Auf diese Weise erhöhen die Bleche 8 zusätzlich die Steifigkeit der Seitenwände 13 gegen ein axiales Aufbiegen bei hoher axialer Belastung der Verbindungsstelle der beiden durch die Profilschelle zu verbindenden Bauteile 15, 16, bei denen es sich hier um Gehäuseteile eines Turboladers eines Dieselmotors oder einer Gasturbine handelt, die aus ferritischen Gußwerkstoffen bestehen und Temperaturen von bis zu 750°C ausgesetzt sind. Die Gehäuseteile 15, 16 haben jeweils einen Flansch 17, 18 mit kegelstumpfförmigen, im verbundenen Zustand der Gehäuseteile 15, 16 einander abgekehrten Seiten, während die einander zugekehrten Seiten der Flansche 17, 18 durch eine wellenförmig umlaufende Metalldichtung 19, die hier schematisch als O-Ring dargestellt ist, gegeneinander abgedichtet sind. Die Neigung der Seitenwände 13 der Kreisringsegmente 6 entspricht der Neigung der kegelstumpfförmigen Seiten der Flansche 17 und 18. Der Innendurchmesser D (Fig. 1) der Kreisringsegmente 6 ist auch im gespannten Zustand der Profilschelle etwas größer als der Außendurchmesser der Flansche 17, 18. Auch der Innendurchmesser d der Flansche 14 ist im gespannten Zustand der Profilschelle etwas größer als der Außendurchmesser der zu verbindenden Bauteile 15, 16 axial außerhalb der Flansche 17, 18.

Die Profilschelle ist jedoch nicht nur zum Verbinden der Gehäuseteile eines Turboladers geeignet, sondern auch zum Verbinden anderer Bauteile, zum Beispiel von Rohren mit den Flanschen 17, 18 entsprechenden Flanschen, insbesondere solchen Bauteilen, die von sehr heißen Fluiden (Flüssigkeiten, Gasen oder Dämpfen) mit Temperaturen bis zu 750°C durchströmt werden.

Der für die Spannbänder 1 und die Kreisringsegmente 6 verwendete Stahl ist martensitisch und hat bei einer Umgebungstemperatur von 20°C bis 750°C einen um wenigstens 0,3·10⁻⁶ m/m°C kleineren Wärmeausdehnungskoeffizienten als ein ferritischer Gußwerkstoff. Die Profilschelle dehnt sich daher mindestens bis zu einer Temperatur von 750°C weniger aus als die durch sie verbundenen Bauteile 15, 16 und stellt mithin mindestens bis zu dieser Temperatur einen festen Zusammenhalt dieser Bauteile sicher.

Die Spannbänder 1 haben eine Dicke von etwa 3 mm und eine Breite von etwa 30 mm. Das Blech der Kreisringsegmente 6 und die Bleche 8 haben ebenfalls eine Dicke von etwa 3 mm. Der Durchmesser D kann im Bereich von 350 bis 550 mm liegen. Die Bleche 8 erstrecken sich in Umfangsrichtung über einen Winkel von etwa 15°.

Nachstehend wird das Herstellungsverfahren der erfindungsgemäßen geschweißten Profilschelle aus martensitischem Stahl für Spezialanwendungen unter Temperatureinfluß bis 750°C anhand von Ausführungsbeispielen der Spannbänder 1 und Kreisringsegmente 6 ausführlicher beschrieben.

Eisen als Hauptbestandteil des Materials der Spannbänder 1 und Kreisringsegmente 6 sowie der Bleche 8 wird mit weiteren Elementen in Mengenverhältnissen gemäß nachstehender Tabelle vermischt:

| **Element** | **Gew.%** | **1. Alternative** | **2. Alternative** | **3. Alternative** |
|---|---|---|---|---|
| C | ≤0,45 | 0,15-0,25 | 0,20-0,35 | ≤0,12 |
| Si | ≤2,0 | 0,2-0,8 | ≤1,4 | ≤1,6 |
| Mn | ≤2,0 | 0,4-1,0 | 0,4-1,0 | ≤1,2 |
| P | ≤0,04 | ≤0,025 | ≤0,035 | ≤0,04 |
| S | ≤0,04 | ≤0,015 | ≤0,020 | ≤0,03 |
| Cr | 15-20 | 15,5-16,0 | 16,5-18,0 | 16-18 |
| Ni | ≥1 | 2,0-2,5 | 1,0-1,5 | 4,0-8,0 |
| Mo | ≤2,5 | 0,3-0,8 | 1,0-1,5 | 1,5-2,5 |
| V | ≤0,5 | ≤0,5 | 0,10-0,15 | ≤0,5 |
| Al | ≤0,1 | ≤0,1 | ≤0,1 | ≤0,1 |
| Co | ≤0,1 | ≤0,1 | ≤0,1 | ≤0,1 |
| Cu | ≤0,4 | ≤0,4 | ≤0,4 | ≤0,4 |
| Pb | ≤0,4 | ≤0,4 | ≤0,4 | ≤0,4 |
| Se | ≤0,1 | ≤0,1 | ≤0,1 | ≤0,1 |
| Te | ≤0,1 | ≤0,1 | ≤0,1 | ≤0,1 |
| Ti | ≤0,5 | ≤0,5 | ≤0,5 | ≤0,5 |
| W | ≤0,1 | ≤0,1 | ≤0,1 | ≤0,1 |
| Zr | ≤0,05 | ≤0,05 | ≤0,05 | ≤0,05 |
| O₂ | ≤0,01 | ≤0,01 | ≤0,01 | ≤0,01 |
| N | ≤0,01 | ≤0,01 | ≤0,01 | ≤0,01 |
| Bi | ≤0,1 | ≤0,1 | ≤0,1 | ≤0,1 |
| B | ≤0,001 | ≤0,001 | ≤0,001 | ≤0,001 |
| Nb | ≤0,05 | ≤0,05 | ≤0,05 | ≤0,05 |

Diese Mischung wird in einem Hochofen geschmolzen, abgegossen und zu einem Band gewalzt. Das Warmbreitband wird weiter ausgewalzt, gespalten (in schmale Bänder zerschnitten), vorvergütet und arondiert (an den Kanten gerundet).Zwischen den einzelnen Walzstichen wird das Material jeweils geglüht. Nach der Vorvergütung wird das Schmalband einem Egalisierstich unterzogen, d.h. durch leichte Kaltverformung auf Endmaß gewalzt.

Aus dem egalisierten Schmalband werden mittels mehrerer Stanz- und Biegevorgänge die Spannbänder 1 und Kreisringsegmente 6 der Profilschelle hergestellt. Desgleichen werden die Bleche 8 aus dem egalisierten Schmalband gestanzt. Dann werden die Schlaufen 9, 10 auf den Spannbändern 1 durch die Buckelschweißungen 11 geschlossen und die Spannbänder 7 in einer Warmhaltebox abgelegt. Hier werden die Spannbänder 1 etwas oberhalb der Martensitstarttemperatur bei 200 bis 350°C bis zum Induktionsanlassen auf Temperatur gehalten.

Durch eine Kurzzeit-Pendelglühung - weniger als 5 Minuten - wobei vorzugsweise um die Ac1-Temperatur (Grenzlinie zwischen dem ferritischen und austenitischen Gebiet des Eisen-Kohlenstoff-Diagramms) gependelt wird, wird der durch die Schweißung zuviel gelöste Kohlenstoff in feine Karbide ausgeschieden. Diese feinen Karbide wirken einer Verringerung der zulässigen Zugspannungsbelastung auch bei hohen Temperaturen entgegen und erhöhen die Warmfestigkeit des Materials.

Am Beispiel einer Warmzugprobe entsprechend der 1. Alternative obiger Tabelle sind in der nachstehenden Tabelle die 0,2%-Dehngrenzen für verschiedene Temperaturen einer ofenvergüteten Probe denen einer induktionsvergüteten Probe mit Pendelglühung gegenübergestellt.

| **Prüftemperatur** | **Probe of envergütet auf 1200 N/mm**^{**2**} | **Probe induktionsver- gütet auf 1200 N/mm**^{**2**} **mit Pendelglühung** |
|---|---|---|
| 500°C | 430 N/mm² | 550 N/mm² |
| 600°C | 305 N/mm² | 410 N/mm² |
| 650°C | 170 N/mm² | 230 N/mm² |
| 700°C | 90 N/mm² | 125 N/mm² |
| 750°C | 60 N/mm² | 70 N/mm² |

Die Kreisringsegmente 6 werden aus dem Schmalband profiliert und auf Durchmesser gerollt. In einer weiteren Schweißoperation werden die vorgeformten geschweißten und angelassenen Spannbänder 1 mit den Kreisringsegmenten 6 und die Bleche 8 mit den Spannbändern 1 und den Kreisringsegmenten 6 verbunden. Nach dem Schweißvorgang erfolgt eine weitere Anlaßbehandlung zur Vermeidung einer Rißbildung und zur Verfeinerung des Schweißgefüges.

Die separat aus Stahl hergestellten Bolzen 2, 3 werden dann jeweils in die zugehörige Schlaufe 9 und 10 eingeführt und durch radiales Eindrücken kurzer Abschnitte 20 der Schlaufenränder über beide Enden der Bolzen 2, 3 hinweg axial in den Schlaufen 9, 10 gesichert. Anschließend können die Spannschrauben 4 in die Bolzen 2, 3 eingeführt werden.

Bei dem Ausführungsbeispiel der erfindungsgemäßen Profilschelle nach Fig. 4 sind die Spannbänder 1 entfallen. Statt dessen sind die Kreisringsegmente 6a an ihren Enden ebenso mit Schlaufen 9, 10 und in diese eingeführten Bolzen 2, 3 wie bei dem ersten Ausführungsbeispiel versehen. Außerdem sind auch die Flansche 14 der Seitenwänden 13a des ersten Ausführungsbeispiels entfallen. Die Versteifungen sind wiederum als Bleche 8a ausgebildet. Sie erstrecken sich außen über die Kreisringsegmente 6a und sind an diesen angeschweißt. Die Ebene der Bleche 8a steht senkrecht zur Umfangsrichtung der Kreisringsegmente 6a. Mehrere Bleche 8a sind in Umfangsrichtung der Kreisringsegmente verteilt angeordnet. Statt aus Blechen 8a können die Versteifungen auch als Sicken ausgebildet sind, die aus dem Bandmaterial der Kreisringsegmente 6a radial nach außen herausgedrückt sind und sich ebenso wie die Bleche 8a quer über die Kreisringsegmente 6a erstrecken.

Die Herstellung der Profilschelle nach Fig. 4 erfolgt sinngemäß in gleicher Weise wie die Profilschelle nach den Fig. 1 bis 3, wobei die Kreisringsegmente 6a ebenso wie die Spannbänder 1 des ersten Ausführungsbeispiels hergestellt und mit den Blechen 8a verschweißt werden. Nach dem Anschweißen der Bleche 8a erfolgt wiederum eine Anlaßbehandlung zur Vermeidung einer Rißbildung und zur Verfeinerung des Schweißgefüges.

Weitere Abwandlungen können zum Beispiel darin bestehen, daß nur ein Spannband 1 mit mehr als zwei Kreisringsegmenten 6 oder anstelle zweier Kreisringsegmente 6a nur ein Kreisringsegment 6a mit nur einem Verschluß, der die zwei Bolzen 2 und 3, zwei Schlaufen 9 und 10 und die Spannschraube 4 aufweist, und einer dem Verschluß diametral gegenüberliegenden biegsamen Stelle, an der die Flansche 13a unterbrochen sind, vorgesehen ist.

Die Anwendung der erfindungsgemäßen Profilschellenverbindung hat insbesondere bei Turboladern und Abgasanlagen gegenüber den derzeitig verschraubten Flanschverbindungen eine erhebliche Einsparung an Material und Zeitaufwand bei der Montage mit einer entsprechenden Kostenreduzierung zur Folge.

## Patentansprüche

1. Profilschelle aus Stahl zum Verbinden von Bauteilen (15, 16), wobei die Profilschelle zumindest teilweise konische, nach innen umgebogene Seitenwände (13; 13a) und Schweißverbindungsstellen (11, 12) aufweist, **dadurch gekennzeichnet, daß** der Stahl martensitisch ist und bei einer Umgebungstemperatur von 20°C bis 750°C einen um wenigstens 0,3·10⁻⁶ m/m°C kleineren Wärmeausdehnungskoeffizienten als ein ferritischer Gußwerkstoff hat.

2. Profilschelle nach Anspruch 1, **dadurch gekennzeichnet, daß** der Stahl, neben Eisen als Hauptbestandteil, aus folgenden Bestandteilen in Gewichtsprozent besteht: bis zu 0,45% C, bis zu 2,0% Si, bis zu 2,0% Mn, bis zu 0,04% P, bis zu 0,04% S, 15 bis 20% Cr, von 1 bis zu 8% Ni, bis zu 2,5% Mo, bis zu 0,5% V, bis zu 0,1% Al, bis zu 0,1% Co, bis zu 0,4% Cu, bis zu 0,4% Pb, bis zu 0,1% Se, bis zu 0,1% Te, bis zu 0,5% Ti, bis zu 0,1% W, bis zu 0,05% Zr, bis zu 0,01% O, bis zu 0,01% N, bis zu 0,1% Bi, bis zu 0,001% B, bis zu 0,05% Nb.

3. Profilschelle nach Anspruch 2, **dadurch gekennzeichnet, daß** für Stahl der Höchstwert von C bei 0,4%, von Si bei 0,5%, von Mn bei 0,8% und von Mo bei 2,0% liegt und daß der Mindestwert von Ni bei 1,0%, von Mo bei 0,3% und von V bei 0,25% liegt.

4. Profilschelle nach einem der Ansprüche 1 bis 3, **dadurch gekennzeichnet, daß** sie wenigstens ein Spannband (1) mit in Form von Schlaufen (9, 10) zurückgebogenen und am Spannband (1) angeschweißten Endabschnitten aufweist, daß jede der Schlaufen (9, 10) von einem Bolzen (2, 3) durchsetzt ist, daß die Bolzen (2, 3) in benachbarten Schlaufen (9, 10) mittels einer mit ihrem Schaft durch Schlitze in den Schlaufen (9, 10) hindurchgeführten Spannschraube (4) mit Kopf verbunden sind, daß an der Innenseite jedes Spannbands (1) wenigstens ein im axialen Querschnitt etwa hutförmiges Kreisringsegment (6) angeschweißt ist, dessen Seitenwände (13) . mit Versteifungen (8) versehen sind, daß der eine (2) zweier benachbarter Bolzen (2, 3) einen etwa tropfenförmigen Querschnitt mit einen weitgehend rechten Winkel einschließenden Seiten hat, von denen sich die eine Seite etwa radial nach außen vom Schellenumfang weg und die andere Seite in Umfangsrichtung der Schelle erstreckt, daß die Form der den im Querschnitt etwa tropfenförmigen Bolzen (2) umgebenden Schlaufe (9) diesem Querschnitt angepaßt ist und daß sich der Spannschraubenkopf an der sich vom Schellenumfang weg erstreckenden Seite der angepaßten Schlaufe (9) abstützt.

5. Profilschelle nach einem der Ansprüche 1 bis 3, **dadurch gekennzeichnet, daß** sie wenigstens ein Kreisringsegment (6a) mit in Form von Schlaufen (9, 10) zurückgebogenen und am Kreisringsegment (6a) angeschweißten Endabschnitten aufweist, daß jede der Schlaufen (9, 10) von einem Bolzen (2, 3) durchsetzt ist, daß die Bolzen (2, 3) in benachbarten Schlaufen (9, 10) mittels einer mit ihrem Schaft durch Schlitze in den Schlaufen (9, 10) hindurchgeführten Spannschraube (4) mit Kopf verbunden sind, daß jedes Kreisringsegment (6a) im axialen Querschnitt etwa hutförmig ist und Seitenwände (13a) mit Versteifungen (8a) aufweist, daß der eine (2) zweier benachbarter Bolzen (2, 3) einen etwa tropfenförmigen Querschnitt mit einen weitgehend rechten Winkel einschließenden Seiten hat, von denen sich die eine Seite etwa radial nach außen vom Schellenumfang weg und die andere Seite in Umfangsrichtung der Schelle erstreckt, daß die Form der den im Querschnitt etwa tropfenförmigen Bolzen (2) umgebenden Schlaufe (9) diesem Querschnitt angepaßt ist und daß sich der Spannschraubenkopf an der sich vom Schellenumfang weg erstreckenden Seite der angepaßten Schlaufe (9) abstützt.

6. Profilschelle nach Anspruch 4 oder 5, **dadurch gekennzeichnet, daß** die Versteifungen (8; 8a) durch an den erwähnten Seitenwänden (13, 13a) angeschweißte Bleche gebildet sind.

7. Profilschelle nach einem der Ansprüche 4 bis 6, **dadurch gekennzeichnet, daß** zwischen dem Spannschraubenkopf und der ihn abstützenden Schlaufe (9) eine Unterlegscheibe (5) mit größerem Durchmesser als der des Schraubenkopfes angeordnet ist.

8. Verfahren zur Herstellung der Profilschelle nach einem der Ansprüche 1 bis 7, **dadurch gekennzeichnet, daß** das Material für die Profilschelle in Form eines Bandes vorvergütet wird und nach der Formgebung und Schweißung die Schweißstelle zur Gefügehomogenisierung induktiv angelassen werden.

9. Verfahren nach Anspruch 8 **dadurch gekennzeichnet, daß** die induktive Anlaßbehandlung eine Kurzzeit-Pendelglühung von weniger als 5 Minuten ist.

10. Verfahren nach Anspruch 9, **dadurch gekennzeichnet, daß** die Pendelglühung um die Ac1-Temperatur herum erfolgt.

## Claims

1. A profile clip of steel for connecting components (15, 16), wherein the profile clip has at least partly conical, inwardly bent-over side walls (13; 13a) and weld joins (11, 12), **characterised in that** the steel is martensitic and at an ambient temperature of 20°C to 750°C has a coefficient of thermal expansion which is at least 0.3·10⁻⁶ m/m°C lower than a ferritic casting material.

2. A profile clip according to claim 1 **characterised in that**, besides iron as the main constituent, the steel comprises the following constituents in percent by weight: up to 0.45% C, up to 2.0% Si, up to 2.0% Mn, up to 0.04% P, up to 0.04% S, 15 to 20% Cr, from 1 to 8% Ni, up to 2.5% Mo, up to 0.5% V, up to 0.1% Al, up to 0.1% Co, up to 0.4% Cu, up to 0.4% Pb, up to 0.1% Se, up to 0.1% Te, up to 0.5% Ti, up to 0.1% W, up to 0.05% Zr, up to 0.01% O, up to 0.01% N, up to 0.1% Bi, up to 0.001% B, and up to 0.05% Nb.

3. A profile clip according to claim 2 **characterised in that** for steel the highest value of C is at 0.4%, of Si at 0.5%, of Mn at 0.8% and of Mo at 2.0% and that the minimum value of Ni is at 1.0%, of Mo at 0.3% and of V at 0.25%.

4. A profile clip according to one of claims 1 to 3 **characterised in that** it has at least one clamping band (1) with end portions which are bent back in the form of loops (9, 10) and welded to the clamping band (1), that a pin (2, 3) is passed through each of the loops (9, 10), that the pins (2, 3) in adjacent loops (9, 10) are connected by means of a clamping screw (4) with head, the screw being passed with its shank through slots in the loops (9, 10), that welded to the inside of each clamping band (1) is at least one circular ring segment (6) which is approximately hat-shaped in axial cross-section and whose side walls (13) are provided with stiffeners (8), that the one (2) of two adjacent pins (2, 3) is of a substantially drop-shaped cross-section with sides which include a substantially right angle and of which the one side extends substantially radially outwardly away from the periphery of the clip and the other side extends in the peripheral direction of the clip, that the shape of the loop (9) surrounding the pin (2) of substantially drop-shaped cross-section is adapted to said cross-section and that the clamping screw head bears against the side of the adapted loop (9), which side extends away from the periphery of the clip.

5. A profile clip according to one of claims 1 to 3 **characterised in that** it has at least one circular ring segment (6a) with end portions which are bent back in the form of loops (9, 10) and welded to the circular ring segment (6a), that a pin (2, 3) is passed through each of the loops (9, 10), that the pins (2, 3) in adjacent loops (9, 10) are connected by means of a clamping screw (4) with head, the screw being passed with its shank through slots in the loops (9, 10), that each circular ring segment is substantially hat-shaped in axial cross-section and has side walls (13a) provided with stiffeners (8a), that the one (2) of two adjacent pins (2, 3) is of a substantially drop-shaped cross-section with sides which include a substantially right angle and of which the one side extends substantially radially outwardly away from the periphery of the clip and the other side extends in the peripheral direction of the clip, that the shape of the loop (9) surrounding the pin (2) of substantially drop-shaped cross-section is adapted to said cross-section and that the clamping screw head bears against the side of the adapted loop (9), which side extends away from the periphery of the clip.

6. A profile clip according to claim 4 or claim 5 **characterised in that** the stiffeners (8; 8a) are formed by metal plates which are welded to the said side walls (13, 13a).

7. A profile clip according to one of claims 4 to 6 **characterised in that** arranged between the clamping screw head and the loop (9) supporting same is a support washer (5) of larger diameter than the diameter of the screw head.

8. A process for producing the profile clip according to one of claims 1 to 7 **characterised in that** the material for the profile clip is subjected to preliminary heat treatment in the form of a band and after shaping and welding the weld is inductively tempered for structural homogenisation.

9. A process according to claim 8 **characterised in that** the inductive tempering treatment is a short-term oscillation annealing operation of less than 5 minutes.

10. A process according to claim 9 **characterised in that** the oscillation annealing operation is effected around the Ac1 temperature.

## Revendications

1. Collier profilé en acier pour relier des composants (15, 16), le collier profilé présentant des parois latérales (13 ; 13') au moins partiellement coniques et recourbées vers l'intérieur et des points d'assemblage par soudage (11, 12) **caractérisé en ce que** l'acier est martensitique et qu'il a, par rapport à un matériau de moulage ferritique, un coefficient de dilatation thermique qui est au moins plus petit de 0,3.10⁻⁶ m/m°C pour une température ambiante comprise entre 20 °C et 750 °C.

2. Collier profilé selon la revendication 1 **caractérisé en ce que** l'acier, outre le fer en tant qu'élément principal, est composé des composants suivants en pourcentage pondéral : jusqu'à 0,45 % de C, jusqu'à 2,0 % de Si, jusqu'à 2,0 % de Mn, jusqu'à 0,04 % de P, jusqu'à 0,04 % de S, de 15 à 20 % de Cr, de 1 à 8 % de Ni, jusqu'à 2,5 % de Mo, jusqu'à 0,5 % de V, jusqu'à 0,1 % d'Al, jusqu'à 0,1 % de Co, jusqu'à 0,4 % de Cu, jusqu'à 0,4 % de Pb, jusqu'à 0,1 % de Se, jusqu'à 0,1 % de Te, jusqu'à 0,5 % de Ti, jusqu'à 0,1 % de W, jusqu'à 0,05 % de Zr, jusqu'à 0,01 % de O, jusqu'à 0,01 % de N, jusqu'à 0,1 % de Bi, jusqu'à 0,001 % de B, jusqu'à 0,05 % de Nb.

3. Collier profilé selon la revendication 2 **caractérisé en ce que**, pour l'acier, la valeur maximale de C est de 0,4 %, de Si de 0,5 %, de Mn de 0,8 %, de Mo de 2,0 % et que la valeur minimale de Ni est de 1,0 %, de Mo de 0,3 % et de V de 0,25 %.

4. Collier profilé selon l'une des revendications 1 à 3 **caractérisé en ce qu'**il présente au moins une bande de serrage (1) avec des tronçons terminaux recourbés en forme de boucle (9, 10) et soudés sur la bande de serrage (1), que chacune des boucles (9, 10) est traversée par un boulon (2, 3), que les boulons (2, 3) sont liés dans des boucles (9, 10) voisines au moyen d'une vis de serrage à tête (4) introduite par sa tige à travers des fentes dans les boucles (9, 10), que sur le côté intérieur de chaque bande de serrage (1) est soudé au moins un segment d'anneau circulaire (6), sensiblement en forme de chapeau en coupe axiale, dont les parois latérales (13) sont munies de renforcements (8), que l'un (2) des deux boulons (2, 3) voisins a une section transversale sensiblement en forme de goutte avec un côté à angle essentiellement droit et dont l'un des côtés s'étend sensiblement radialement vers l'extérieur de la périphérie du collier et l'autre côté s'étend en direction périphérique du collier, que la forme de la boucle (9) entourant le boulon (2) à section transversale sensiblement en forme de goutte est ajustée à cette section transversale et que la tête de la vis de serrage s'appuie sur le côté de la boucle (9) ajustée qui s'écarte de la périphérie du collier.

5. Collier profilé selon l'une des revendications 1 à 3 **caractérisé en ce qu'**il présente au moins un segment d'anneau circulaire (6a) avec des tronçons terminaux recourbés en forme de boucle (9, 10) et soudés sur le segment d'anneau circulaire (6a), que chacune des boucles (9, 10) est traversée par un boulon (2, 3), que les boulons (2, 3) sont liés dans des boucles (9, 10) voisines au moyen d'une vis de serrage à tête (4) introduite par sa tige à travers des fentes dans les boucles (9, 10), que chaque segment d'anneau circulaire (6a) a sensiblement une forme de chapeau en coupe axiale et présente des parois latérales (13a) avec des renforcements (8a), que l'un (2) de deux boulons (2, 3) voisins a une section transversale sensiblement en forme de goutte avec un côté à angle essentiellement droit, dont l'un des côtés s'étend sensiblement radialement vers l'extérieur de la périphérie du collier et l'autre côté s'étend en direction périphérique du collier, que la forme de la boucle (9) entourant le boulon (2) à section transversale sensiblement en forme de goutte est ajustée à cette section transversale et que la tête de la vis de serrage s'appuie sur le côté de la boucle (9) ajustée qui s'écarte de la périphérie du collier.

6. Collier profilé selon la revendication 4 ou 5 **caractérisé en ce que** les renforcements (8, 8a) sont formés par des tôles soudées auxdites parois latérales (13, 13a).

7. Collier profilé selon l'une des revendications 4 à 6 **caractérisé en ce qu'**une rondelle (5) d'un diamètre supérieur à celui de la tête de la vis de serrage est placée entre la tête de la vis de serrage et la boucle (9) qui la soutient.

8. Procédé pour fabriquer le collier profilé selon l'une des revendications 1 à 7 **caractérisé en ce que** le matériau pour le collier profilé est prétrempé sous forme d'une bande et les points de soudure, après le façonnage et le soudage, sont soumis à un revenu inductif pour homogénéiser la structure.

9. Procédé selon la revendication 8 **caractérisé en ce que** le traitement de revenu inductif est un recuit cyclique de courte durée de moins de 5 minutes.

10. Procédé selon la revendication 9 **caractérisé en ce que** le recuit cyclique à lieu approximativement à la température Ac1.
